# EUROPÄISCHE PATENTANMELDUNG

(11) **EP 2 302 471 A2**
(43) Veröffentlichungstag der Anmeldung: **30.03.2011**
(21) Anmeldenummer: 10176260.7
(22) Anmeldetag: 10.09.2010
(51) Int. Cl.: G05B 19/042, H01R 4/10, H01R 4/26

(54) **Signalgesteuerter Arbeitsplatz, Funktionsmodul für einen signalgesteuerten Arbeitsplatz und Verfahren an einem signalgesteuerten Arbeitsplatz**

(30) Priorität: 17.09.2009 DE 102009042565
(71) Anmelder: Morath Systems e.k., 78054 Villingen-Schwenningen (DE)
(72) Erfinder: Morath, Michaela, Dipl.-Inf., 78054 Villingen-Schwenningen (DE); Totzek, Heiko, Dipl.-Ing., 78056 Villingen-Schwenningen (DE)
(74) Vertreter: Kaufmann, Ursula Josefine

(57) **Zusammenfassung**

Die Erfindung betrifft ein Funktionsmodul (1) für einen signalgesteuerten Arbeitsplatz (30), insbesondere für einen Montagearbeitsplatzes und/oder einen Kommissionierarbeitsplatz, wobei das Funktionsmodul (1) eine eingangsseitig erste Kontaktverbindung (8) und eine ausgangsseitig zweite Kontaktverbindung (10) aufweist, wobei die erste und die zweite Kontaktverbindung (8, 10) komplementär zueinander ausgebildet sind, und die erste Kontaktverbindung (8) dazu ausgelegt ist, eine Strom- und/oder Datenversorgung für das Funktionsmodul (1) bereitzustellen, wobei ein Prozessor (11) zum Verarbeiten von Daten vorgesehen ist, die von der Kontaktverbindung (8) bereitgestellt werden, und wobei der Prozessor (11) ausgelegt ist, auf Basis einer über die Datenversorgung empfangenen Aktivierungs-/Deaktivierungsaufforderung eine Funktion des Funktionsmoduls (1) zu aktivieren bzw. deaktivieren, einen signalgesteuerten Arbeitsplatz (30) mit einem solchen Funktionsmodul (1), sowie ein Arbeits- oder Produktionsverfahren an einem signalgesteuerten Arbeitsplatz (30).

## Beschreibung

Vorliegende Erfindung betrifft ein Funktionsmodul für einen sogenannten signalgesteuerten Arbeitsplatz, insbesondere für einen Montagearbeitsplatz oder für einen Kommissionierarbeitsplatz, einen signalgesteuerten Arbeitsplatz mit einem solchen Funktionsmodul, sowie ein Verfahren an einem solchen signalgesteuerten Arbeitsplatz.

An einem signalgesteuerten Arbeitsplatz, wie er z.B. bei einem so genannten "One-Piece-Flow"-Arbeitsplatz eingesetzt wird oder auch bei Kommissioniersystemen, fertigt ein Bearbeiter aus mehreren Einzelelementen einen Gegenstand, oder mehrere Einzelelemente werden zusammenpackt (kommissioniert), die dann als fertiges Produkt ausgegeben werden oder als Zwischenprodukt an eine weitere Produktionsstation, z. B. einen weiteren signalgesteuerten Arbeitsplatz, weitergegeben werden. Bei einem signalgesteuerten Arbeitsplatz sind Funktionsmodule vorgesehen, die diejenigen Aufnahmevorrichtungen kennzeichnen, aus denen ein Element entnommen, bzw. kommissioniert werden soll. Damit können auch ungeübte Benutzer verwechslungssicher verschiedene Elemente in der richtigen Reihenfolge entnehmen, selbst bei großer Variantenvielfalt des zu fertigenden Produkts.

Solche Systeme sind auch als "Pick-by-Lighf"-Systeme bekannt oder als "Poka-Yoke"-Systeme. Der Ausdruck "Pick-by-Light" deutet darauf hin, dass an der jeweiligen Aufnahmevorrichtung, aus der zu einem gegebenen Zeitpunkt ein Element entnommen werden soll, eine Lampe aufleuchtet. Dabei kann zudem vorgesehen sein, dass diese Funktionsmodule auch die Anzahl der zu entnehmenden Elemente anzeigt.

Um die Funktionsmodule abhängig von den benötigten Elementen anzusteuern und/oder eine Anzeige bereitzustellen, ist eine Strom- und/oder Datenversorgung für die Funktionsmodule nötig, wobei üblicherweise Bussysteme eingesetzt werden und die Ansteuerung der Funktionsmodule zentral über eine EDV erfolgt, so dass die Verkabelung der einzelnen Aufnahmevorrichtungen mit ihren Funktionsmodulen aufwendig ist.

Aus dem Stand der Technik, beispielsweise der Gebrauchsmusterschrift DE 297 10 044 U1, oder den Internetauftritten der Firmen SSI Schäfer Peem GmbH (vgl. http://www.ssi-schaefer.de/Pick-by-Light.696.0.html) oder KBS Industrieelektronik GmbH (vgl. http://www.kbs-gmbh.de/de/produkte_dienstleistungen/pickterm_flexible/) ist bekannt, an den Aufnahmevorrichtungen eines Kommissioniersystems, insbesondere an Fachböden eines Regals, Schienen anzubringen, die in einer zu einem Rand des Fachbodens weisenden Innenseite eine Kabelleitung für die Strom- und/oder Datenversorgung aufnehmen. Zur Montage der Schiene und des Kabels sind üblicherweise Werkzeuge notwendig, was einen erhöhten Montageaufwand bedeutet. Die Außenseite der Schiene ist dazu ausgelegt, dass ein Funktionsmodul eingeklipst werden kann.

Um eine Verbindung zwischen dem Funktionsmodul und den in der Schiene geführten Kabelleitungen herzustellen, kann das Funktionsmodule entweder mit einer Durchdringungsvorrichtung ausgestattet sein, so dass beim Einklipsen des Funktionsmoduls eine Kontaktvorrichtung eine Kabelummantelung durchdringt (Durchdringungstechnik, auch genannt "Vampir-Technik") und einen Kontakt zu dem Kabel herstellt, oder es ist eine zusätzliche Kontaktverbindung, beispielsweise eine Buchse vorgesehen, mit der ein am Funktionsmodul vorgesehener Stecker kontaktierend zusammenwirkt. Die Durchdringungstechnik ist zwar preisgünstig, da keine separate Steckvorrichtung notwendig ist, allerdings ist ein derartiges Funktionsmodul nicht beliebig oft steckbar, da die elektrischen Leitungen insbesondere beim Herausziehen eines Funktionsmoduls beschädigt werden können.

Da die Ansteuerung der aus dem Stand der Technik bekannten Systeme zentral über ein EDV erfolgt, muss der gesamte Arbeitsplatz mit derartigen Schienen ausgestattet werden, auch wenn nur eine Teilauslastung des Arbeitsplatzes erfolgt, was zum einen einen sehr großen Verkabelungsaufwand bedeutet und zum andere nicht bei jedem bestehenden System möglich ist. Zudem müssen, da insbesondere bei der Durchdringungstechnik (Vampir-Technik) beim Herausnehmen von Funktionsmodulen eine Beschädigung der Kabel erfolgen kann, die Kabel nach einer gewissen Zeit ersetzt werden, was kostenintensiv ist.

Inzwischen spielt die Optimierung von Produktionsabläufen auch für die Fertigung von Werkstücken in der heutigen Markt- und Wettbewerbssituation eine zunehmend große Rolle. Aufgrund dieser Anforderung haben in der Vergangenheit viele Unternehmen auch die Fertigung von Produkten auf das One-Piece-Flow Prinzip umgestellt.

Der Grundgedanke des One-Piece-Flow Prinzips bei der Fertigung von Werkstücken besteht darin, dass der Gesamtfertigungsprozess in Unterprozesse aufgeteilt wird, die wiederum abschließend in einer One-Piece-Flow Zelle oder einem One-Piece-Flow Arbeitsplatzsystem durchgeführt werden. Dabei führen Mitarbeiter einer One-Piece-Flow Zelle alle in dieser Zelle anfallenden Arbeiten durch, bevor das Produkt in die weitere One-Piece-Flow Zelle übergeben wird. Eine One-Piece-Flow Zelle kann aus mehreren One-Piece-Flow Arbeitsplätzen bestehen, an denen unterschiedliche Fertigungsschritte durchgeführt werden.

Dabei steigen jedoch die Anforderungen an die Mitarbeiter, da die Mitarbeiter nun die Verantwortung für den ganzen in der One-Piece-Flow Zelle ablaufenden Produktionsprozess übernehmen müssen. Gleichzeitig haben jedoch Unternehmen den Wunsch, diese Arbeiten von wenig qualifizierten und damit günstigen Arbeitnehmer durchführen zu lassen. Um trotzdem einen hohen Qualitätsstandard und eine geringe Fehlerquote zu gewährleisten, werden die Mitarbeiter durch ausgedruckte Arbeitsanweisungen, Schulungen und Werkzeug, das eine fehlerfreie Bedienung ermöglicht, unterstützt. Diese Maßnahmen reichen jedoch häufig nicht aus und sind aufgrund der anfallenden Schulungen und personalintensiven Betreuungen der Mitarbeiter kostenintensiv.

Aus der oben beschriebenen Kommissionierung ist auch das genannte "Pick-by-Light" Kommissioniersystem bekannt, bei dem, um das Auffinden der kommissionierenden Artikel zu erleichtern und gleichzeitig eine deutliche Verringerung des Fehlerrisikos zu gewährleisten, die Aufnahmevorrichtungen der jeweiligen Elemente, gesteuert durch eine zentrale EDV, beleuchtet und über ein Display an der jeweiligen Aufnahmevorrichtung die Anzahl der zu entnehmenden Element angezeigt wird.

Nachteilig ist jedoch, dass die Dimensionen der Kommissioniersysteme so groß sind, dass die bekannten Pick-by-Light Systeme für einen signalgesteuerten Arbeitsplatz in der Montage nicht verwendet werden können.

Zudem haben die bekannten Funktionsmodule den Nachteil, dass ihre Strom- und/oder Datenversorgung über in den Schienen laufende Kabelleitungen erfolgt, die zum einen zeit- und kostenaufwändig an den Arbeitsplätzen verlegt werden müssen, oder an bereits bestehende Arbeitsplätze nicht verwendet werden können, da keine Befestigungsmöglichkeit für die Schienen gegeben ist. Zum anderen ist die Kontaktierung zwischen Funktionsmodul und Strom- und/oder Daten Versorgungsleitung, wie bereits oben erwähnt, verschleißintensiv bei wiederholter Montage von Funktionsmodulen (Durchdringungstechnik) oder verkabelungsintensiv, da ein separates Kabel zu verlegen ist. Ferner sind Werkzeuge und Fachpersonal erforderlich.

Aufgabe vorliegender Erfindung ist es deshalb, ein Funktionsmodul für einen signalgesteuerten Arbeitsplatz bereitzustellen, wobei einerseits eine vereinfachte und verschleißarme Strom- und/oder Datenversorgung bereitgestellt ist, und andererseits das Funktionsmodul auch dazu ausgelegt ist, flexibel an einem signalgesteuerten Arbeitsplatz in der Fertigung von Werkstücken einsetzbar zu sein.

Gemäß einem weiteren Aspekt ist es Aufgabe der Erfindung, einen signalgesteuerten Arbeitsplatz bereitzustellen, an dem ein Bearbeiter intuitiv die erforderlichen Arbeitsschritte ausführen kann, so dass auf kostenintensive Schulungen oder spezialisierte Werkzeuge verzichtet werden kann.

Diese Aufgaben werden erfindungsgemäß durch die Merkmale der unabhängigen Ansprüche gelöst. Günstige Ausgestaltungen und Vorteile der Erfindung ergeben sich aus den weiteren Ansprüche, den Zeichnungen und der Beschreibung.

Gemäß einem ersten Aspekt der Erfindung wird ein Funktionsmodul für einen signalgesteuerten Arbeitsplatz vorgeschlagen, das eine eingangsseitig erste Kontaktverbindung und eine ausgangsseitig zweite Kontaktverbindung aufweist, wobei die erste und die zweite Kontaktverbindung komplementär zueinander ausgebildet sind, und die erste Kontaktverbindung dazu ausgelegt ist, eine Strom- und Datenversorgung für das Funktionsmodul bereitzustellen, wobei ein Prozessor zum Verarbeiten von Daten vorgesehen ist, die von der Kontaktverbindung bereitgestellt werden, und wobei der Prozessor ausgelegt ist, auf Basis einer über die Datenversorgung empfangenen Aktivierungs-/Deaktivierungsaufforderung eine Funktion des Funktionsmoduls zu aktivieren bzw. deaktivieren. Selbstverständlich können auch mehr Kommandos möglich sein, wie "an/aus", Auslesen von Messwerten, Steuern der Lichtintensität von Funktionsmodulen und dergleichen mehr. Der Prozessor kann eine vollständige Datenverarbeitungseinheit mit programmierbarer Funktionsfähigkeit darstellen und kann einen Programm- und einen Datenspeicher umfassen. Die Kommunikation kann bidirektional ausgebildet sein. Der Prozessor kann Informations- /Steuer- und/oder Programmdaten über die Kontaktverbindung empfangen und/oder senden. Er kann ein Funktionselement wie beispielsweise zumindest ein Leuchtelement, insbesondere mehrfarbiges Leuchtelement, Akustikelement, Vibrationselement, Displayelement oder ähnliches auf Basis empfangener Daten aktivieren oder deaktivieren und kann Benutzereingaben einer Eingabevorrichtung am Funktionsmodul, beispielsweise berührungsloser Näherungssensor, insbesondere magnetischer oder kapazitiver Näherungssensor, Tast- oder Schaltelement oder Vergleichbares für eine Benutzereingabe, beispielsweise Vorgangsquittierung, Auswahl- oder Bestätigungsfunktion oder dergleichen, empfangen und verarbeiten.

Das Funktionsmodul erlaubt vorteilhaft beispielsweise die Fertigung von Werkstücken oder das Ausführen wechselnder Arbeitsschritte, das Signalisieren von wechselnden Prozessen.

Durch die komplementär ausgebildeten eingangs- bzw. ausgangsseitigen Kontaktverbindungen können die Funktionsmodule direkt miteinander verbunden werden, so dass, durch beispielsweise einfaches Ineinanderstecken, eine Strom- bzw. Datenversorgung mehrere in Reihe angeordneter Funktionsmodule sichergestellt werden kann. Demnach können die Funktionsmodule selbst dazu verwendet werden, die Strom- und/oder Datenversorgung bereitzustellen, so dass auf ein Verkabeln ganzer Regale bzw. Arbeitsplätze verzichtet werden kann. Vorteilhaft sind die eingangs- bzw. ausgangsseitigen Kontaktverbindungen auf gegenüberliegenden Seiten einer Elektronikplatine angeordnet. Die eingangs- und ausgangsseitigen Kontaktverbindungen sind mit Strom- und Datenleitungen verbunden, welche entlang der Elektronikplatine geführt sind. Die Datenversorgung und Datenverteilung erfolgt beispielsweise über einen Datenbus, insbesondere CAN-Bus, wobei eine adressierbare Datenvermittlung, insbesondere Unicast oder Multicast, und/oder eine Broadcast-Datenverteilung von außen an die Funktionsmodule oder auch zwischen den Funktionsmodulen zur Verfügung gestellt werden kann.

Ein Vorteil der erfindungsgemäßen Funktionsmodule ist die Möglichkeit, unabhängig von einem Schienensystem kleine dezentrale Arbeitsplätze bereitstellen zu können. Ein Schienensystem bedeutet einen hohen Montageaufwand. Zunächst müssen eine oder mehrere Schienen passen zugeschnitten werden. Sodann müssen Bohrungen an den Schienen und an den vorgesehenen Befestigungsplätzen angebracht werden und die Schienen z.B. angeschraubt werden. Ferner müssen Kabel passend zugeschnitten, mit Steckern versehen und in die Schienen eingefädelt werden. Bei Durchstoßsystemen werden entsprechende bekannte Funktionsmodule in das Kabel durch die Isolierung eingesteckt. Dies erschwert das Auswechseln oder Umsetzen von derartigen bekannten Funktionsmodulen. Beim Herausnehmen der bekannten Funktionsmodule besteht die Gefahr, dass Verbindungsleitungen im Kabel zerstört werden oder ein Kurzschluss entsteht. Ein weiterer Vorteil ist darin zu sehen, dass eine erhöhte Packungsdichte von Funktionsmodulen d.h. mehr Funktionsmodule pro Fläche, möglich ist. Es können Kleinteile verwendet werden, und am Arbeitsplatz sind kurze Greifwege möglich. Insbesondere können Arbeits- und Montageplätze bestückt werden, die nur wenig Platz verbrauchen.

Die erfindungsgemäßen Funktionsmodule können relativ filigran ausgebildet sein, die praktisch werkzeuglos montiert werden können. Dadurch, dass die Strom- und Datenleitungen innerhalb der erfindungsgemäßen Funktionsmodule verlaufen, können die erfindungsgemäßen Funktionsmodule einfach ausgetauscht oder versetzt werden, ohne Gefahr, die Strom- und Datenleitungen zu beschädigen.

Dabei kann, wie ein Ausführungsbeispiel zeigt, das Funktionsmodul als sogenanntes Leermodul ausgebildet sein, das lediglich eine Weiterleitung von Strom und Daten an weitere, in der Reihe folgend angeordnete Funktionsmodule, bereitstellt. Dazu ist die erste und/oder die zweite Kontaktverbindung dazu ausgelegt, eine Datenweiterleitung bereitzustellen und das Funktionsmodul weist zwischen erster und zweiter Kontaktverbindung eine Strom- und Datenleitung auf. Statt des Leermoduls kann das Funktionsmodul auch für eine Datenverarbeitung ausgelegt sein. Beide Kontaktverbindungen können Strom auslesen.

Ferner wird gemäß einem zweiten Aspekt der Erfindung ein Funktionsmodul für einen signalgesteuerten Arbeitsplatz vorgeschlagen, insbesondere für einen Montagearbeitsplatzes und/oder einen Kommissionierarbeitsplatz, bei dem das Funktionsmodul eine einzige Kontaktverbindung aufweist, die an ein Kontaktierungssystem, insbesondere Schienensystem ankoppelbar ist, welches eine Strom- und/oder Datenversorgung für das Funktionsmodul bereitstellt, wobei ein Prozessor zum Verarbeiten von Daten vorgesehen ist, die von der Kontaktverbindung bereitgestellt werden, und wobei der Prozessor ausgelegt ist, auf Basis einer über die Datenversorgung empfangenen Aktivierungs-/Deaktivierungsaufforderung eine Funktion des Funktionsmoduls zu aktivieren bzw. deaktivieren. Das Kontaktierungssystem kann ein Schienensystem mit einem, zwei oder mehreren elektrisch leitenden und durch das Funktionsmodul kontaktierbaren Strom- und Datenleitungen sein, allerdings ist auch ein Kabelstecksystem oder ähnliches sequentiell kontaktierbares Verbindungssystem denkbar.

Gemäß beiden Aspekten der Erfindung wirkt der Prozessor vorteilhafterweise mit einem Funktionselement des Funktionsmoduls zusammen. Das Funktionselement stellt die Funktion des Funktionsmoduls bereit, beispielsweise eine Anzeigemöglichkeit, wobei der Prozessor vorteilhafterweise zum Steuern, insbesondere zum Aktivieren bzw. Deaktivieren des Funktionselements ausgelegt ist. Der Prozessor kann einen Lese- und Schreib-Speicher umfassen, insbesondere einen nichtflüchtigen Lese- und Schreib-Speicher. Der Speicher kann Programmdaten für eine Ablaufsteuerung des Prozessors und Funktionsaktivierungsdaten, insbesondere ldentifizierungscodedaten nebst zugeordneter Funktionsaktivierungsbeschreibung enthalten.

Wie ein weiteres vorteilhaftes Ausführungsbeispiel zu beiden Aspekten der Erfindung zeigt, kann das Funktionselement beispielsweise als Leuchtelement ausgebildet werden, so dass das Funktionsmodul als Leucht- oder Anzeigenmodul dient. Das Leuchtelement kann vorteilhafterweise aus einer LED oder einer LED-Anzeigevorrichtung bestehen, so dass das Funktionsmodul beleuchtet werden kann und/oder eine Information über die Anzeigevorrichtung an einen Bearbeiter übermittelt werden kann. Dies ist insbesondere vorteilhaft, wenn einem Bearbeiter visuell angezeigt werden soll, welche und wie viele Elemente aus einer Aufnahmevorrichtung des signalgesteuerten Arbeitsplatzes benötigt werden. lst das Funktionsmodul als Anzeigemodul ausgebildet, kann zudem vorteilhaft sein, wenn eine Oberseite bzw. die die Anzeige bereitstellende Seite eine spezielle Oberflächenstruktur aufweist, die eine maximale Lichtstreuung ermöglicht.

Zusätzlich oder alternativ kann das Funktionselement gemäß beiden Aspekten der Erfindung ein Akustikelement als Funktionselement aufweisen. Dies ist insbesondere dann vorteilhaft, wenn einem Bearbeiter die korrekte Entnahme eines Elements aus einer Aufnahmevorrichtung angezeigt werden soll. Beispielsweise kann es vorteilhaft sein, mittels zweier verschiedener Töne einem Bearbeiter anzuzeigen, ob sein Griff in die Aufnahmevorrichtung korrekt, also das in der Aufnahmevorrichtung enthaltene Bauteil für die Fertigung des Werkstücks benötigt wird, oder inkorrekt ist. Ein akustisches Signal ist aber auch dann von Vorteil, wenn beispielsweise einem Bearbeiter angezeigt werden soll, dass ausreichend viele Bauteile aus der Aufnahmevorrichtung entnommen sind.

Vorteilhafterweise kann das Funktionsmodul gemäß beiden Aspekten der Erfindung ebenfalls zusätzlich oder alternativ einen Sensor, insbesondere einen Bewegungssensor, aufweisen. Dieser Sensor kann beispielsweise den Griff eines Bearbeiters in die Aufnahmevorrichtung registrieren und kann zudem dazu ausgelegt sein, mit Leuchtelement und/oder akustischem Element zusammenzuwirken, um einen korrekten Ablauf, etwa einen Arbeitsablauf oder einen Produktionsablauf zu ermöglichen. Der Bearbeiter kann beispielsweise einen Sender, Empfänger, einen RFID-Chip, einen Magneten oder dergleichen, z.B. an der Hand mit sich führen, der durch das Funktionsmodul erkennbar ist, so dass der Eingriff in die Aufnahmevorrichtung mit einer Entnahme eines Elements aus der Aufnahmevorrichtung oder der Ablage eines Elements in die Aufnahmevorrichtung registriert werden kann, beispielsweise mit einer Quittierungsfunktion, die automatisch oder händisch ausgelöst werden kann.

Wie ein weiteres vorteilhaftes Ausführungsbeispiel zu beiden Aspekten der Erfindung zeigt, kann vorgesehen sein, dass der Prozessor derart ausgelegt ist, dass er durch sequenzielles Ansteuern von mehreren Funktionselementen in einem einzigen Funktionsmodul den Arbeits- oder Produktionsablauf einem Bearbeiter vermitteln kann.

Denkbar ist auch ein sequentielles Abarbeiten von Ablaufschritten, etwa Arbeitsablaufschritten oder Produktionsablaufschritten, mit verschiedenen Funktionsmodulen zu verwirklichen. So kann in einem ersten Schritt mit einer ersten Gruppe von Funktionsmodulen und in einem oder mehreren weiteren Schritten mit weiteren Gruppen von Funktionsmodulen gearbeitet werden. In diesem Falle ist eine individuelle Adressierung der einzelnen Funktionsmodule zweckmäßig, was ansonsten nicht notwendig ist. So können einzelne adressierte Funktionsmodule miteinander kommunizieren, um das Abarbeiten eines Ablaufschritts mitzuteilen, damit der nächste Ablaufschritt von dem nächsten Funktionsmodul oder der nächsten Gruppe von Funktionsmodulen ausgeführt werden kann. Gegebenenfalls können diese Funktionsmodule dezentral miteinander kommunizieren.

Gemäß einem weiteren vorteilhaften Ausführungsbeispiel zu beiden Aspekten der Erfindung kann das Funktionsmodul weiterhin eine Eingabevorrichtung aufweisen, die mit dem Prozessor zusammenwirkt, so dass das Funktionselement über ein externes Bedienelement ansteuerbar ist. Das Bedienelement kann z.B. ein Programmierstift sein, der berührungslos magnetisch oder kapazitiv oder durch Druck mechanisch mit der Eingabevorrichtung des Funktionsmoduls wechselwirkt. Damit kann eine direkte Zugriffs- oder Programmiermöglichkeit des Prozessors geschaffen werden. Insbesondere kann eine dezentrale Zugriffs- oder Programmiermöglichkeit des Prozessors geschaffen werden. Durch die dezentrale Programmierung der Funktionsmodule entfällt die Notwendigkeit aufwändigen Umschreibens von Software, um etwa Schnittstellen neu zu programmieren, wenn ein anderer Ablauf, etwa ein Arbeitsablauf oder ein Produktionsablauf z.B. für die Herstellung einer anderen Baugruppe programmiert werden soll. Mittels dieser direkten Programmiermöglichkeit der einzelnen Funktionsmodule ist beispielsweise realisierbar, einen Arbeits- oder Produktionsablauf einfach und schnell über eine vorgeschaltete Programmierung zu definieren, insbesondere durch eine scangestützte Programmierung, bei der ein Programmierer durch manuelles Aktivieren bzw. Deaktivieren des Funktionsmoduls bzw. einzelner Funktionselemente die für eine Fertigung benötigte Elemente entsprechend einem ldentifizierungscode abspeichern kann. Dazu kann ein Funktionsmodul einen Speicherbereich für eine Mehrzahl, z.B. bis zu Hundert, von Abläufen unterschiedlicher Baugruppen aufweisen. Auf einfache Weise kann ein Einpflegen der Baugruppen des Arbeitsplatzes oder eines Arbeitsplatzsystems mittels einer zugehörigen Artikelnummer, einer Artikelnamen oder Ähnlichem in Form eines Barcodes erfolgen. Der Barcode kann ein vielstelliger, z.B. dreißigstelliger, Zeichencode aus Buchstaben und/oder Zahlen sein. In einem Programmiermodus wird z.B. ein Barcode eingelesen, der spezifisch einen Ablauf beschreibt, worauf diejenigen Funktionsmodule mit dem externen Bedienelement aktiviert werden, die bei dem Arbeits- oder Produktionsablauf aktiv sein sollen, woraufhin die Programmierung durch Einlesen eines weiteren Barcodes gespeichert wird.

Dabei kann auch eine sequentielle Abfolge von Aktivieren und Deaktivieren durch direkte Eingabe an der Eingabevorrichtung des jeweiligen Funktionsmoduls abgespeichert werden. Eine Änderung oder Anpassung des signalgesteuerten Arbeitsplatzes kann vorteilhaft mit wenig Aufwand vor Ort erfolgen.

Des Weiteren kann das Funktionsmodul gemäß beiden Aspekten der Erfindung ein Befestigungselement, insbesondere eine Klemmlasche aufweisen, um das Funktionsmodul beispielsweise an einer Aufnahmevorrichtung für z.B. zu einer Baugruppe gehörigen Elemente des signalgesteuerten Arbeitsplatzes anzubringen. Dabei ist insbesondere eine Klemmlasche, die auf die Dimensionen einer Greifschale ausgelegt ist, vorteilhaft, da dann das Funktionsmodul direkt an der Aufnahmevorrichtung befestigt werden kann. Ebenfalls vorteilhaft ist jedoch auch eine Ausgestaltung, bei der das Funktionsmodul beispielsweise an die Stirnseite eines Regalbretts klemmbar ist. In diesem Fall ist gemäß dem ersten Aspekt der Erfindung vorteilhaft, dass einzelne Funktionsmodule mit der Klemmlasche aufgesteckt werden können und dann einfach einander verbunden werden können und beispielsweise auf eine entsprechende Schiene am Arbeitsplatz aufgesteckt werden können. Alternativ kann auch eine Befestigung mit Klettverschlüssen oder doppelseitigem Klebeband vorgesehen sein, da die Funktionsmodule klein und leicht sind.

Gemäß einem weiteren, dritten Aspekt der Erfindung wird ein signalgesteuerter Arbeitsplatz, insbesondere ein Montagearbeitsplatz zum Fertigen eines Werkstücks aus mindestens einem Element oder ein Kommissionierarbeitsplatz, vorgeschlagen, wobei der Arbeitsplatz mindestens ein Funktionsmodul gemäß dem ersten oder zweiten Aspekt der Erfindung aufweist und eine an dem Arbeitsplatz, vorteilhafterweise zentral angeordnete Strom- und/oder Datenversorgungseinrichtung vorgesehen ist, mit der die Strom- und/oder Datenversorgung des mindestens einen Funktionsmoduls erfolgt, wobei das mindestens eine Funktionsmodul einen Prozessor zum Verarbeiten von Daten aufweist, die von der Kontaktverbindung bereitgestellt werden, und wobei der Prozessor ausgelegt ist, auf Basis einer über die Datenversorgung empfangenen Aktivierungs-/Deaktivierungsaufforderung eine Funktion des Funktionsmoduls zu aktivieren bzw. deaktivieren.

Des Weiteren ist es vorteilhaft, wenn die Daten- und/oder Stromversorgungseinrichtung eine Schnittstelle aufweist, an der ein tragbares Datengerät und/oder Eingabegerät, beispielsweise ein Barcodescanner oder ein Computer, etwa ein Laptop, anschließbar ist, der den auszuführenden Ablauf, etwa einen Produktionsablauf bzw. ein zu fertigendes Werkstück, definiert. Mit großem Vorteil ist ein Barcodescanner einsetzbar, da eine Programmierung der Funktionsmodule und ein Inbetriebsetzen der Funktionsmodule für einen Arbeitsablauf oder Produktionsablauf einfach über das Einlesen von Barcodes erfolgen kann, da die einzelnen Funktionsmodule im Programmiermodus direkt mit dem externen Bedienelement aktiviert oder deaktiviert werden können. Auch ein Abrufen der gespeicherten Arbeits- oder Produktionsabläufe kann auf diese Weise erfolgen.

Der signalgesteuerte Arbeitsplatz ist besonders günstig, wenn dort mindestens zwei verschiedene Baugruppen oder Systeme verbaut werden. Der Arbeitsplatz kann mit einer größeren Anzahl von Varianten von Baugruppen oder Systemen bestückt werden, was sehr platzsparend und daher preiswert ist. Selbst bei großer Variantenvielfalt an diesem signalgesteuerten Arbeitsplatz kann die Arbeit effektiv und durch die visuelle Führung des Bearbeiters durch die Funktionsmodule fehlerfrei erledigt werden.

Die relativ geringe Größe der Funktionsmodule bietet weiterhin die Möglichkeit, mehrere Arbeitsplätze nach Belieben zu gruppieren, etwa winklig zueinander oder z.B. in einem Kreisbogen zu stellen. Mit den aus dem Stand der Technik bekannten Kontaktschienen ist dies aufgrund deren Abmessungen nicht oder nur sehr eingeschränkt möglich.

Dabei kann der signalgesteuerten Arbeitsplatz vorteilhafterweise Aufnahmevorrichtungen für Elemente aufweisen, die mit einem oder mehreren Funktionsmodulen gekoppelt sind, z.B. an denen das Funktionsmodul angebracht ist. Vorzugsweise sind mehrere Funktionsmodule zusammengefügt. Wie bereits oben umrissen, kann das Funktionsmodul oder die miteinander verbundenen Funktionsmodule jedoch auch an anderen beliebigen Stellen des Arbeitsplatzes angebracht sein. Beispielsweise ist ebenfalls denkbar, die Funktionsmodule an einer Tischkante eines mit mehreren Funktionen ausgestatteten Arbeitstisches anzuordnen, so dass ein Bearbeiter angeleitet werden kann, verschiedene Arbeitsschritte in definierter Reihenfolge auf dem Arbeitstisch auszuführen. Auch in diesem Fall hat die modulare Aufbauweise aus Funktionsmodulen einen klaren Vorteil, da keine Kabel verlegt werden müssen, um die Funktionsmodule mit Strom bzw. Daten zu versorgen. Dies hat den weiteren Vorteil, dass auch bestehende Arbeitsplatzsysteme mit dem modularen System nachgerüstet werden können.

Um den Verkabelungsaufwand möglichst gering zu halten, ist es weiterhin vorteilhaft, wenn die an dem signalgesteuerten Arbeitsplatz angebrachte Strom- bzw. Datenversorgungseinrichtung zentral angeordnet ist und mehrere parallele Ausgänge aufweist, die wiederum jeweils mehrere in Reihe angeordnete Funktionsmodule mit Strom bzw. Daten versorgen können. Dies hat den Vorteil, dass beispielsweise an einem Regal mit mehreren Fachböden nur eine zentrale Strom- und/oder Datenversorgungseinrichtung angebracht werden muss, die mit ihren parallel angeordneten Ausgängen die an den Fachböden angebrachten Funktionsmodule mit Daten und/oder Strom versorgt.

Vorteilhaft können die signalgesteuerten Arbeitsplätze zu einem signalgesteuerten Arbeitsplatzsystem kombiniert werden. Eine Anordnung der Arbeitsplätze kann dabei aufgrund der geringen Größe der einzelnen Funktionsmodule mit großer Designfreiheit gestaltet werden.

Gemäß einem weiteren Aspekt der Erfindung wird ein Arbeits- oder Produktionsverfahren nach dem diesem Prinzip vorgeschlagen, insbesondere ein Kommissionierverfahren oder ein Verfahren zum Fertigen eines Werkstücks, wobei ein signalgesteuerten Arbeitsplatz mit vorzugsweise mindestens einem Funktionsmodul gemäß dem ersten oder zweiten Aspekt der Erfindung zum Einsatz kommt.

Vorteilhafterweise wird in einem ersten Schritt des Arbeits- oder Produktionsverfahrens festgestellt, welche Elemente für das Verfahren benötigt werden. Dies geschieht beispielsweise mittels Einlesens eines vordefinierten ldentifizierungscodes, insbesondere eines Barcodes, der die Funktionsmodule definiert, die die benötigten Elemente kennzeichnen bzw. die an den Aufnahmevorrichtungen angebracht sind, die die benötigten Elemente beinhalten.

Über die Strom- und/oder Datenversorgungseinrichtung an dem Arbeitsplatz wird dann eine Aktivierungs-/Deaktivierungsaufforderung an die Funktionsmodule übermittelt. Diese an alle Funktionsmodule gesendete Aktivierungs-/Deaktivierungsaufforderung wird von den Prozessoren in den Funktionsmodulen verarbeitet, so dass, falls das Funktionsmodul in bzw. entsprechend dem ldentifizierungscode als benötigtes Element beschrieben ist, der Prozessor die Funktion des Funktionsmoduls, beispielsweise die Anzeige, aktiviert bzw. nach Feststellen der Beendigung der benötigten Schritte das Funktionselement deaktiviert. Dies kann beispielsweise dadurch erfolgen, dass ein Datenspeicher des Prozessors eine Liste von ldentifizierungscode umfasst, wobei bei Empfang eines im Speicher enthaltenen ldentifizierungscodes eine vorbestimmte Funktion des Funktionsmoduls aktiviert wird. Ist der empfangenen Identifizierungscode nicht im Speicher des Prozessors abgelegt, kann eine Deaktivierung des Funktionselements erfolgen.

Dadurch kann ein Bearbeiter durch einen Fertigungsprozess geführt werden, indem dem Bearbeiter intuitiv vermittelt wird, welche Elemente zum Herstellen der durch den ldentifizierungscode definierten der Baugruppe bzw. des Werkstücks verwendet werden müssen und/oder welche Arbeitsabläufe zum Fertigen nötig sind.

Dazu kann der ldentifizierungscode auch Informationen über die sequenzielle Verwendung der benötigten Elemente enthalten, so dass aufgrund der schrittweisen Anleitung des Bearbeiters durch das Arbeits- oder Produktionsverfahren die Fehlerquote während des Verfahrens verringert wird. Dabei ist insbesondere vorteilhafter, wenn das Funktionsmodul mit einem Sensorelement, etwa mit einer Lichtschranke oder einem Näherungssensor, ausgestattet ist, das eine Entnahme eines Elements aus einer Aufnahmevorrichtung registriert und diese Entnahme an die Strom- und/oder Datenversorgungseinrichtung bzw. den Prozessor übermittelt. Hierbei kann ein Funktionsmodul nach beendetem Arbeitsschritt, d.h. Signalisierung des Sensorelements ein Sequenzfortschrittssignal an ein in der Sequenz nachfolgendes Funktionsmodul adressbasiert oder ein globales Sequenzfortschrittssignal in einem Broadcast-Rundruf an alle Funktionsmodule senden, so dass sich ein in der Sequenz nachfolgendes Funktionsmodul beispielsweise durch Vergleich der Anzahl der empfangenen Sequenzfortschrittssignale aktiviert bzw. deaktiviert .

Gemäß einem weiteren vorteilhaften Ausführungsbeispiel erfolgt das Vordefinieren des ldentifizierungscodes folgendermaßen:
In einem ersten Schritt wird ein vorzudefinierender ldentifizierungscode für ein Werkstück bzw. eine Baugruppe definiert. In einem sich daran anschließenden Schritt werden die für das Werkstück benötigten Elemente definiert. Dies kann beispielsweise durch Betätigung der an dem Funktionsmodul angebrachten Eingabevorrichtung erfolgen, wodurch die Funktionsmodule aktiviert und/oder deaktiviert werden. Dabei kann der Identifizierungscode neben den zu aktivierenden Funktionsmodulen auch die sequenzielle Abfolge, in der die Funktionsmodule aktiviert/deaktiviert werden, enthalten. Sind alle benötigten Elemente durch Aktivierung/Deaktivierung der zugehörigen Funktionsmodule gekennzeichnet, werden sie unter dem ldentifizierungscode in den zugehörigen Funktionsmodulen abgespeichert.

Es kann eine Vielzahl von Baugruppen/Werkstücken, Arbeitsabläufen und/oder Produktionsabläufen für unterschiedliche Baugruppen/Werkstücke in den Prozessoren der Funktionsmodule, beispielsweise in Form von ldentifizierungscodes mit diesbezüglicher Funktionsbeschreibung, gespeichert sein. Eine Mehrzahl von Funktionsmodulen ist z.B. an Behältern mit Elementen für eine oder mehrere Baugruppen angebracht oder optisch zugeordnet. Soll aktuell eine der Baugruppen gefertigt werden, können die für die jeweilige Baugruppe oder den Arbeits- oder Produktionsablauf gedachten Funktionsmodule aktiviert werden, indem der betreffende ldentifizierungscode, z.B. der betreffende Barcode, an der Datenversorgungseinrichtung eingelesen wird. Die Datenversorgungseinrichtung kann immer gleichzeitig alle Funktionsmodule ansprechen, d.h. es wird an alle Funktionsmodule ein ldentifizierungscode entsprechend dem "Broadcast"-Prinzip gesendet, bei dem alle Funktionsmodule angesprochen werden. Die Funktionsmodule müssen daher keine individuelle Adresse aufweisen. Nur diejenigen Funktionsmodule, welche für den entsprechenden ldentifizierungscode programmiert wurden, werden aktiviert. Alternativ kann selektiv auf Basis von Adressdaten, die in dem ldentifizierungscode gespeichert oder durch eine übergeordnete Logik dem ldentifizierungscode hinzugefügt werden, einzelne Funktionsmodule zur Aktivierung bzw. Deaktivierung adressiert werden.

Ein Abruf eines eingepflegten ldentifizierungscodes, z.B. eines Barcodes, der eine Artikelnummer, einen Artikelnamen oder dergleichen darstellt, kann mit einem einzigen Barcode-Scan erfolgen. Der Benutzer muss also lediglich den aktuellen ldentifizierungscode für die gewünschte Baugruppe einlesen, gegebenenfalls ein Quittungssignal geben oder einlesen und wird dann durch die "Pick-by-Light"-Funktionsmodule durch den Arbeits- oder Produktionsablauf geführt, bzw. ergreift nur solche Elemente aus solchen Behältern am Arbeitsplatz, die durch ein aktiviertes Funktionsmodul gekennzeichnet sind. Durch Beleuchten der Behälter mit den zur gewünschten Baugruppe gehörenden Elementen kann ein sicheres Signalisieren und somit Greifen auch bei einem variantenreichen Arbeitsplatz oder Arbeitsplatzsystem mit vielen verschiedenen Behältern für verschiedene Baugruppen erfolgen. Verschiedene Varianten von Baugruppen können beispielweise mittels verschiedener Farbmodi der Funktionselemente verwechslungssicher kenntlich gemacht werden. Um die aktuelle Sequenz abzubrechen, kann ein automatischer Abbruch vorgesehen sein, wenn ein Quittungssignal nach einer vorgegebenen Zeit nicht eingeht und/oder es kann ein explizites Abbruchsignal über einen entsprechenden ldentifizierungscode eingegeben bzw. eingelesen werden.

Eine Programmierung von Funktionsmodulen für eine Baugruppe kann sehr einfach erfolgen, indem ein der Baugruppe entsprechender ldentifizierungscode an der Datenversorgungseinrichtung eingelesen wird. Der ldentifizierungscode kann gegebenenfalls vom Benutzer selbst erstellt werden, etwa als Barcode. Funktionsmodule sind z.B. an Behältern mit Elementen angebracht oder optisch zugeordnet. Es können alle Funktionsmodule angesprochen und in einen Programmiermodus versetzt werden. Alternativ können einzelne Funktionsmodule zur Programmierung adressiert werden. Dann können ausgewählte Funktionsmodule direkt mittels der Eingabevorrichtung am jeweiligen Funktionsmodul, die z.B. mit einem externen Bedienelement wie einem Programmierstift betätigbar ist, aktiviert werden. Sind alle Funktionsmodule, die ausgewählten Behältern mit Bauteilen der Baugruppe zugeordnet sind, aktiviert, kann gegebenenfalls noch z.B. eine Farbe für die Leuchtanzeige, etwa eine Farbe, ausgewählt werden. Dies kann ebenfalls durch Einlesen eines entsprechenden ldentifizierungscodes für die auszuwählende LED-Farbe erfolgen. Dann können die Einstellungen gespeichert werden, indem ein weiterer ldentifizierungscode als Quittungssignal für das Speichern eingelesen wird. Um die Programmierung abzubrechen, kann ein automatischer Abbruch vorgesehen sein, wenn das Quittungssignal nach einer vorgegebenen Zeit nicht eingeht und/oder es kann ein explizites Abbruchsignal über einen entsprechenden ldentifizierungscode eingegeben bzw. eingelesen werden. Im aktuellen Programmiermodus durchgeführte Änderungen werden dann verworfen.

Ebenso können einzelne gespeicherte Baugruppen oder Abläufe gelöscht werden, indem ein dem Löschen zugeordneter ldentifizierungscode eingelesen wird. Der der zu löschenden Baugruppe oder dem Ablauf entsprechende Identifizierungscode wird eingelesen. Das Löschen kann bestätigt werden, indem ein weiterer ldentifizierungscode als Quittungssignal eingelesen wird. Unterbleibt das Einlesen des dem Quittungssignal entsprechenden ldentifizierungscodes, wird das Löschen nach einer bestimmten Zeit automatisch abgebrochen bzw. es kann ein ldentifizierungscode vorgesehen sein, das einen Abbruch der Löschungssequenz bewirkt und Änderungen verwirft. Entsprechend können alle Baugruppen gelöscht werden, indem ein dem allgemeinen Löschbefehl zugeordnetes ldentifizierungscode eingelesen wird. Die Löschungsaufforderung kann ebenso bestätigt werden, indem ein weiterer ldentifizierungscode als Quittungssignal eingelesen wird.

Daneben ist denkbar, die im Datenspeicher abgelegte Programmierung eines, ausgewählter oder aller Funktionsmodule adressierbar durch die Datenverbindung auszulesen und beispielsweise mittels einer an die Datenleitung oder an das Funktionsmodul unmittelbar ankoppelbaren Programmiervorrichtung, insbesondere portablen Computers, auszulesen, zu verändern oder neu einzulesen. Eine direkte Ein-/Auslesemöglichkeit kann beispielsweise zur Erstellung einer Sicherheitskopie oder zur Ausrüstung einer Vielzahl von Arbeitsplätzen mit einer gleichartigen Programmierung vorteilhaft sein. Über eine solche externe Einlese/Auslesemöglichkeit über die Datenversorgungsleitung kann auch eine Betriebssoftware, mit der der Prozessor betrieben wird, ausgetauscht werden.

Dabei ist vorteilhaft, wenn der ldentifizierungscode beispielsweise ein Barcode ist, der mittels eines an dem signalgesteuerten Arbeitsplatz vorhandenen Barcodescanners an der Datenversorgungseinrichtung eingelesen werden kann. Dies stellt eine einfache und kostengünstige Programmier- und Lesevorrichtung dar, wodurch der Arbeitsplatz einfach und schnell optimiert, umgerüstet oder individualisiert werden kann.

Weitere bevorzugte Ausgestaltungen und Vorteile der Erfindung ergeben sich aus den Ansprüchen, den Zeichnungen und der Beschreibung.

Im Folgenden wird die Erfindung beispielhaft, ohne Beschränkung der Allgemeinheit, anhand von in den Zeichnungen dargestellten Ausführungsbeispielen näher erläutert.

Es zeigen:
- Fig. 1: eine schematische Explosionsdarstellung eines bevorzugten Ausführungsbeispiels des erfindungsgemäßen Funktionsmoduls von vorne;
- Fig. 2: eine schematische Explosionsdarstellung des in Fig. 1 dargestellten Ausführungsbeispiels des erfindungsgemäßen Funktionsmoduls von hinten;
- Fig. 3: eine schematische Darstellung von in Reihe angeordneten erfindungsgemäßen Funktionsmodulen;
- Fig. 4A: eine schematische Darstellung eines bevorzugten Ausführungsbeispiels für einen erfindungsgemäßen signalgesteuerten Arbeitsplatz;
- Fig. 4B: einer Vergrößerung einer schematischen Darstellung einer Daten/Stromversorgungseinrichtung des in Fig. 4A dargestellten signalgesteuerten Arbeitsplatzes;
- Fig. 4C: eine schematische Darstellung eines bevorzugten Ausführungsbeispiels signalgesteuerten Arbeitsplatzsystems; und
- Fig. 5: ein Flussdiagramm der bevorzugten Programmierschritte eines ldentifizierungscodes.

In den Figuren sind funktionell gleich wirkende Elemente jeweils mit gleichen Bezugszeichen beziffert.

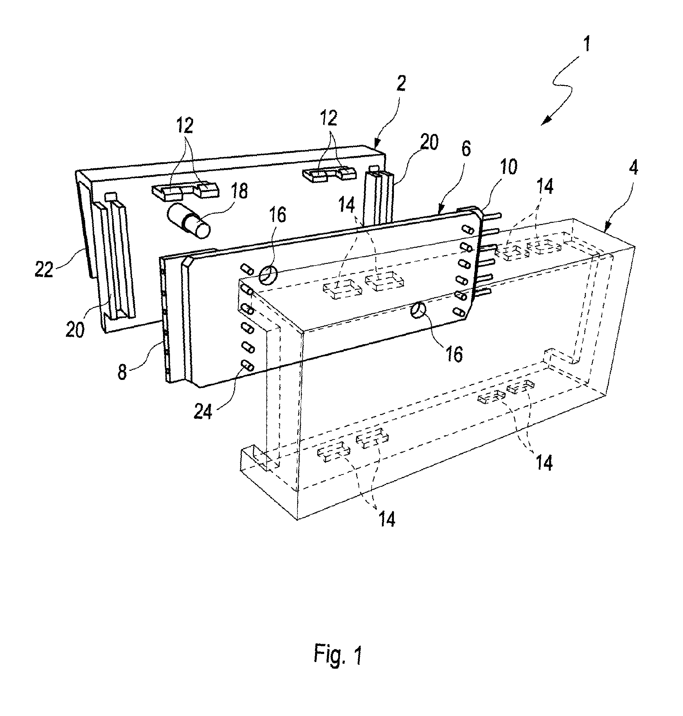

Fig. 1 zeigt eine schematische Darstellung eines günstigen Ausführungsbeispiels des erfindungsgemäßen Funktionsmoduls 1 für einen signalgesteuerten Arbeitsplatz in Explosionsdarstellung von vorne.

Das in Fig. 1 dargestellte Funktionsmodul 1 besteht aus einem Unterteil 2, einem Oberteil 4 und einer zwischen Unterteil 2 und Oberteil 4 angeordneten Elektronikplatine 6.

Dabei weist die Elektronikplatine 6 eine erste Kontaktverbindung 8 und eine zweite Kontaktverbindung 10 an gegenüberliegenden Seiten der Elektronikplatine 6 auf, wobei die erste Kontaktverbindung 8 und die zweite Kontaktverbindung 10 komplementär zueinander ausgebildet sind. In dem in Fig. 1 dargestellten Ausführungsbeispiel sind die erste und die zweite Kontaktverbindung 8, 10 als Stecker-Buchsen-System ausgebildet, wobei in dem hier dargestellten Ausführungsbeispiel die eingangsseitig angeordnete erste Kontaktverbindung 8 als Buchse und die ausgangsseitig angeordnete zweite Kontaktverbindung 10 als Stecker ausgebildet ist. Es ist jedoch auch möglich, die ausgangseitig angeordnete Kontaktverbindung als Buchse und die eingangsseitig angeordnete Kontaktverbindung als Stecker auszubilden, oder eine andere Art der vorzugsweise komplementären Kontaktverbindung zu verwenden.

Die in Fig. 1 dargestellten Steckverbindungen haben den Vorteil, dass mittels ihnen eine Kontaktverbindung zwischen Funktionsmodulen 1 bzw. zwischen dem Funktionsmodul 1 und einer Strom- bzw. Datenversorgungseinrichtung auf einfache Weise ermöglicht werden kann. Vom Rahmen der Erfindung sind jedoch auch alle weiteren Kontaktverbindungen umfasst, die eine Strom- und/oder Datenübertragung in bzw. aus dem Funktionsmodul 1 ermöglichen.

Vorteilhafterweise sind Unterteil 2 und Oberteil 4 aus einem Polycarbonatkunststoff gefertigt, der schlagzäh ist und sowohl eine Ausführung in blickdicht (Unterteil 2) als auch in durchsichtig (Oberteil 4) ermöglicht. Selbstredend sind statt Polycarbonat auch andere Materialien verwendbar. Zusätzlich kann das Oberteil 4 eine spezielle Oberflächenstruktur aufweisen, um eine maximale Lichtstreuung zu bewirken.

Zum Verbinden und Befestigen von Unterteil 2 und Oberteil 4 weist das Funktionsmodul 1 Rastnasen 12 auf, die in dem in Fig. 1 dargestellten Ausführungsbeispiel integral mit dem Unterteil 2 ausgeformt sind. Die Rastnasen 12 wirken mit in dem Oberteil 4 angeordneten Rastaufnahmen 14 zusammen, so dass Unterteil 2 und Oberteil 4 zusammengehalten werden. Selbstverständlich können die Rastnasen auch an dem Oberteil 4 und die Rastaufnahmen an dem Unterteil 2 ausgebildet sein. Zudem können statt der hier dargestellten Verbindung auch andere Verbindungen verwendet werden, um das Unterteil 2 mit dem Oberteil 4 zu verbinden. So ist beispielsweise auch eine Schraubverbindung oder eine Verklebung denkbar.

Die zwischen Unterteil 2 und Oberteil 4 angeordnete Elektronikplatine 6 weist in dem in Fig. 1 dargestellten Ausführungsbeispiel zwei Öffnungen 16 auf, die mit zwei Vorsprüngen 18, die, wie hier dargestellt, als integral mit dem Unterteil 2 ausgeformte Zapfen ausgebildet sind, zusammenwirken. Die Vorsprünge 18 tauchen in die Öffnungen 16 ein, so dass die Elektronikplatine 6 an der Unterseite 2 gehalten werden kann. Gehen die Rastnasen 12 in Eingriff mit den Rastaufnahmen 14, werden die Elektronikplatine 6 und die beiden Kontaktverbindungen 8, 10 ebenfalls befestigt.

Vorteilhafterweise sind zudem an der Unterseite 2 zwei Aufnahmen 20 ausgeformt, die dazu ausgelegt sind, die erste und die zweite Kontaktverbindung 8, 10 in Position zu halten. Das Oberteil 4 weist eine entsprechende Aussparung auf, in welche die Aufnahmen 20 hineinragen. Werden Unterseite 2 und Oberteil 4 zusammengefügt, ist die Elektronikplatine 6 mit den Kontaktverbindungen 8, 10 automatisch arretiert. Des Weiteren weist das Funktionsmodul 1 eine Klemmlasche 22 auf, die insbesondere eine einfache Befestigungsmöglichkeit des Funktionsmoduls 1 an einer Aufnahmevorrichtung (nicht dargestellt) ermöglicht.

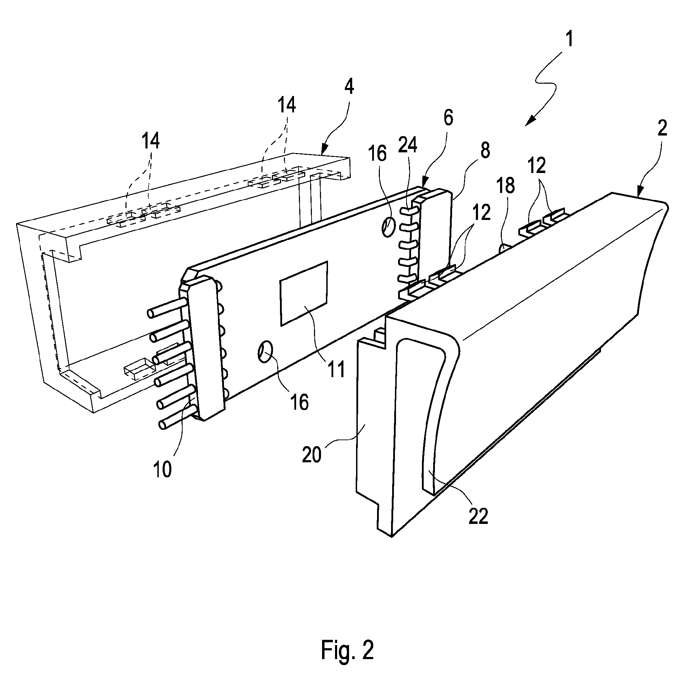

Die Klemmlasche 22 ist besonders gut in Fig. 2 erkennbar, die eine schematische Explosionsdarstellung des Funktionsmoduls 1 von hinten zeigt.

Des Weiteren kann Fig. 2 entnommen werden, dass von den Kontaktverbindungen 8, 10 Strom- und/oder Datenleitungen 24, insbesondere Strom- und Datenleitungen 24, die Elektronikplatine 6 kontaktieren bzw. durchdringen, wie Fig. 1 zu entnehmen ist. Diese Strom- und/oder Datenleitungen 24 können zudem einen Prozessor 11, insbesondere einen Prozessor 11 mit Speicherbereich und/oder Funktionselemente (nicht dargestellt) mit Strom und/oder Daten versorgen. Die Strom- und/oder Datenleitungen 24 können jedoch auch lediglich eine Strom- und/oder Datenweiterleitung durch das Funktionsmodul 1 von der ersten Kontaktverbindung 8 zu der zweiten Kontaktverbindung 10 bereitstellen. Diese Art von Funktionsmodul 1 wird hier auch als Leermodul bezeichnet.

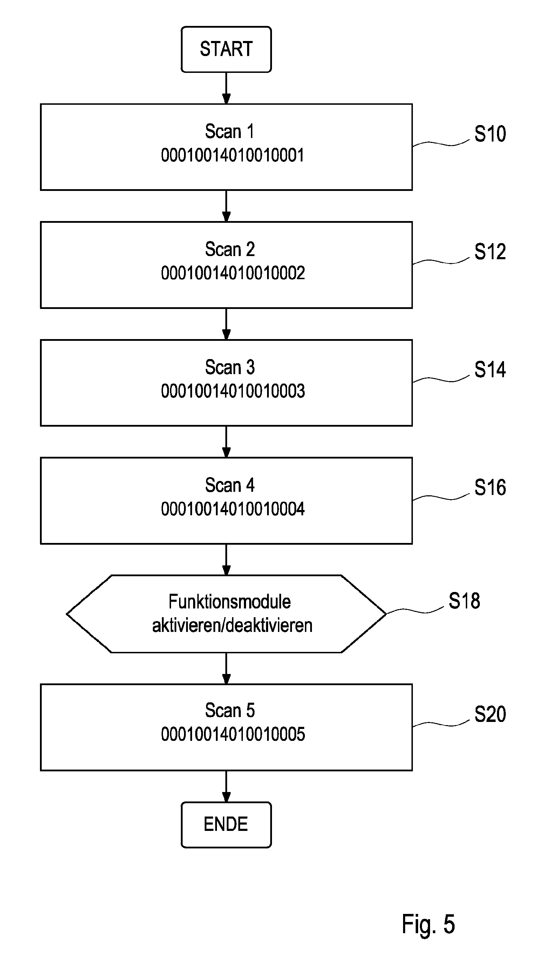

Des Weiteren kann das Funktionsmodul 1 eine ebenfalls nicht dargestellte Eingabevorrichtung aufweisen, die mit dem Prozessor 11 zusammenwirkt und vorteilhafterweise eine Aktivierung/Deaktivierung des Funktionsmoduls 1 ermöglicht. Zudem kann mittels der Eingabevorrichtung auch eine direkte Programmierung des Prozessors 11 mittels eines Handscanners oder eines externen Bedienelements, z.B. eines Programmierstifts, ermöglicht werden. Eine beispielhafte Programmierung wird schrittweise im Zusammenhang mit der Beschreibung von Fig. 5 erläutert werden.

Als Funktionselemente können beispielsweise Leuchtdioden (LEDs) eingesetzt werden, die eine Beleuchtung oder eine Anzeige ermöglichen. Zudem können Sensoren eingesetzt werden, die eine Annäherung, einen Durchgriff oder eine Entnahme registrieren können.

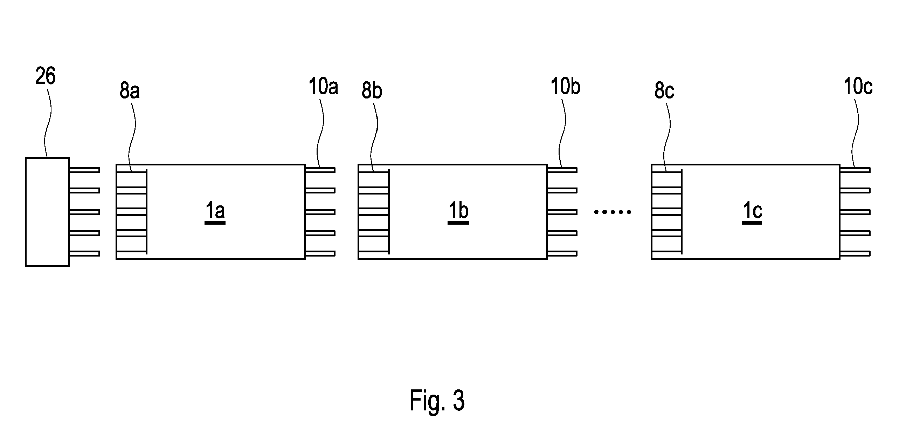

Das in den Figuren 1 und 2 dargestellten Funktionsmodul 1 kann über die erste bzw. die zweite Kontaktverbindung 8, 10 mit einem weiteren Funktionsmodul oder einer Strom- und/oder Datenversorgungseinrichtung verbunden werden. Dies ist schematisch in Fig. 3 dargestellt.

Die in Fig. 3 schematisch dargestellten Funktionsmodule 1a, 1 b und 1 c weisen jeweils erste Kontaktverbindungen 8a, 8b, 8c und zweite Kontaktverbindungen 10a, 10b, 10c auf, die in dem in Fig. 3 dargestellten Ausführungsbeispiel als Buchsen (eingangsseitige erste Kontaktverbindungen 8a, 8b, 8c) und als Stecker (ausgangseitige zweite Kontaktverbindungen 10a, 10b, 10b) ausgebildet sind. Aufgrund der komplementären Ausgestaltung der ersten und zweiten Kontaktverbindung 8a, 10a; 8b, 10b; 8c, 10c können die Funktionsmodule 1 a, 1 b, 1 c einfach ineinander gesteckt werden, so dass eine Strom- und Datenverbindung zwischen den Funktionsmodulen 1a, 1b, 1 c entsteht.

Vorteilhafterweise können die Funktionsmodule 1a, 1 b, 1 c mit einer entsprechenden Kontaktverbindung 26 ausgestatteten Strom- und/oder Datenversorgungseinrichtung (nicht dargestellt) verbunden werden. In Fig. 3 ist schematisch lediglich eine als Stecker ausgebildete ausgangseitige Kontaktverbindung 26 einer solchen Strom- und/oder Datenversorgungseinrichtung dargestellt.

Die zentrale Strom- und/oder Datenversorgungseinrichtung hat den Vorteil, dass für die Strom- und/oder Datenversorgung von mehreren Funktionsmodulen 1a, 1 b, 1 c nur eine einzige Kontaktverbindung 26 zu der zentralen Strom- und/oder Datenversorgungseinrichtung gegeben sein muss, da der Strom bzw. die Daten von den Funktionsmodulen 1 a, 1 b, 1 c selbst aneinander weitergegeben werden. So kann an der Strom- und/oder Datenversorgungseinrichtung ein Einlesen eines ldentifizierungscodes erfolgen, während an den daran angeschlossenen Funktionsmodulen 1a, 1 b, 1 c lokal eine Aktivierung oder Deaktivierung durch Betätigen der Eingabevorrichtung des jeweiligen Funktionsmoduls 1a, 1b, 1c erfolgen kann.

Um auch größere Strecken oder Leerstände möglichst stromsparend zu überwinden, kann vorgesehen sein, dass Funktionsmodule 1a, 1b, 1c als sogenannte Leermodule ausgebildet sind, die lediglich eine Strom- und/oder Datenweiterleitung bereitstellen.

Häufig sind signalgesteuerten Arbeitsplätze aus Standardelementen mit Rastermaßen aufgebaut. Besonders vorteilhaft ist, wenn die einzelnen Funktionsmodule 1a, 1 b, 1 c Rastermaße aufweisen, die mit einer Rasterung eines signalgesteuerten Arbeitsplatzes bzw. einer dort verwendeten Aufnahmevorrichtung korrespondieren, insbesondere rationale Bruchteile des Rastermaßes der Standardbreite des Arbeitsplatzes betragen. Dabei kann beispielsweise vorgesehen sein, dass die Länge eines Funktionsmoduls 1a, 1 b, 1 c ungefähr bei 50 mm und die Breite bei ungefähr 20 mm liegt, so dass gängige Greifschalen mit den Funktionsmodulen 1 a, 1b, 1 c ausgestattet werden können.

Da die Funktionsmodule 1a, 1 b, 1 c einfach aneinander gesteckt werden und lediglich eine zentrale Strom- und/oder Datenversorgungseinrichtung bereitgestellt werden muss, können die Funktionsmodule 1 a, 1 b, 1 c auch an bereits bestehenden Arbeitsplätzen eingesetzt werden.

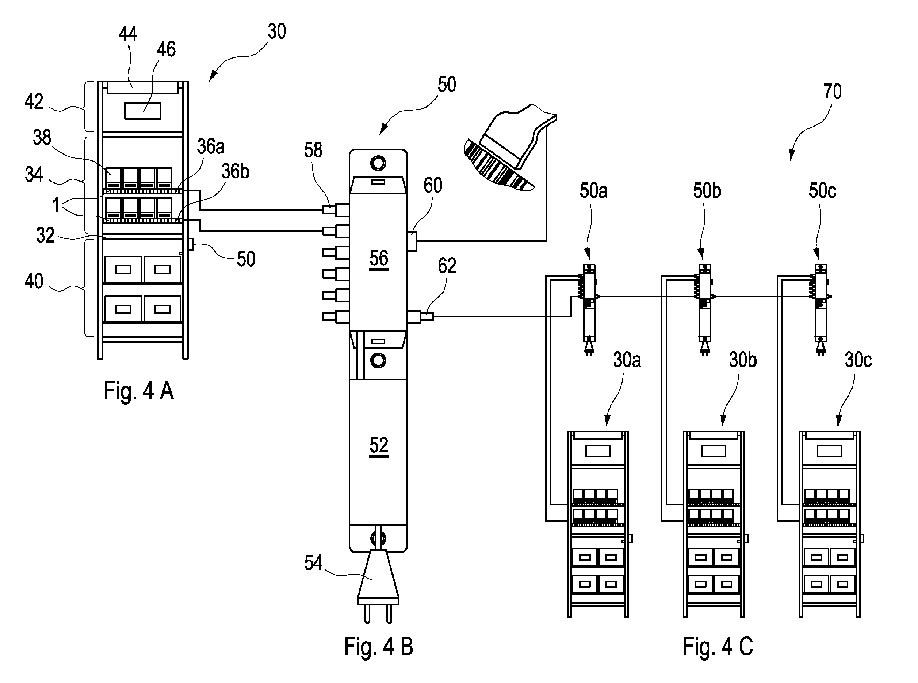

Schematisch ist ein derartiger signalgesteuerter Arbeitsplatz 30 in Fig. 4A dargestellt. Der in Fig. 4A dargestellte signalgesteuerten Arbeitsplatz 30 besteht aus einer Arbeitsplatte 32, einem über der Arbeitsplatte 32 angeordneten Regalabschnitt 34, der mindestens einen Fachboden 36 aufweist, wobei auf dem Fachboden 36 Aufnahmevorrichtungen 38 angeordnet sind. In dem in Fig. 4A dargestellten Ausführungsbeispiel sind zwei Fachböden 36a, 36b gezeigt. Beide Fachböden 36a, 36b sind an ihrer Stirnseite mit einer Reihe von zusammengesteckten Funktionsmodulen 1 versehen, wobei die Länge der Reihe der Breite der Fachböden 36a, 36b entspricht. Die Positionierung der Funktionsmodule 1 kann insbesondere auf die Aufnahmevorrichtungen 38 abgestimmt sein, so dass z.B. bei Aufleuchten eines Funktionsmoduls 1 unter einer der Aufnahmevorrichtungen 38 angezeigt wird, dass aus dieser Aufnahmevorrichtung 38 ein Element entnommen werden soll.

Des weiteren kann der Arbeitsplatz 30 einen Werkzeugabschnitt 40 aufweisen, der unterhalb der Arbeitsplatte 32 angeordnet ist, sowie einen Beleuchtungs- und Anzeigeabschnitt 42, der zum einen eine Beleuchtung 44 der Arbeitsplatte 32 ermöglicht, und zum anderen mit einer Anzeigevorrichtung 46 ausgestattet ist, die eine Kennzeichnung des Arbeitsplatzes 30 ermöglicht. Der Werkzeugabschnitt 40 kann ebenfalls Fachböden 36c, 36d aufweisen, die mit Aufnahmevorrichtungen 38 ausgestattet sind.

Zudem können auch die Aufnahmevorrichtungen 38 in dem Werkzeugabschnitt 40 mit Funktionsmodulen 1 gekennzeichnet sein, um einem Bearbeiter intuitiv den richtigen Gebrauch bzw. die richtige Abfolge von Werkzeugen zu vermitteln.

Des Weiteren weist der in Fig. 4A dargestellte signalgesteuerte Arbeitsplatz 30 eine Strom- und Datenversorgungseinrichtung 50 auf, die vergrößert in Fig. 4B dargestellt ist. Die Strom- und Datenversorgungseinrichtung 50 weist, wie Fig. 4B zu entnehmen ist, ein Netzteil 52 auf, das mittels eines Steckers 54 eine Stromversorgung bereitstellt. Des Weiteren umfasst die Strom- und Datenversorgungseinrichtung 50 eine Steuereinheit 56 mit mehreren Anschlüssen 58, 60 und 62 auf.

Dabei stellen die mit 58 gekennzeichneten Anschlüsse Strom- und Datenausgänge dar, die wiederum mit den an den Fachböden 36a, und 36b angebrachten Funktionselementen 1 zusammenwirken. Dabei ist eines der Funktionsmodule 1 als Kabelmodul ausgebildet, das mit der Strom- und Datenversorgungseinrichtung 50 über ein Kabel verbunden ist. Das Kabelmodul kann prinzipiell beliebig in der Reihe der Funktionsmodule 1 platziert werden. Die Anschlüsse 58 sind derart ausgestaltet, dass sie eine einfache Verbindung und Kontaktiermöglichkeit mit den Funktionsmodulen 1, beispielsweise über einen als zweite Kontaktverbindung ausgestalteten Ausgang 26 (siehe Fig. 3), darstellen. Wie der Figur zu entnehmen ist, ist beispielsweise das äußerste in der Reihe der Funktionsmodule 1 als Kabelmodul ausgebildet und weist einen Anschluss für die von den Anschlüssen 58 kommenden Strom- und Datenleitungen auf. Beispielsweise kann die Verbindung über ein Netzwerkkabel oder eine andere geeignete Verbindung hergestellt werden.

Weiterhin kann eine Schnittstelle 60 vorhanden sein, die eine Verbindung zu einem Datengerät und/oder Eingabegerät, insbesondere einem Barcodescanner, ermöglicht. Mittels dieser Schnittstelle 60 können beispielsweise Identifizierungscodes für die Bearbeitung bzw. Fertigung von Baugruppen bzw. Werkstücken eingegeben werden, insbesondere mittels eines Barcodes eingelesen werden.

Ist für die Fertigung eines Werkstücks oder einen Arbeitsablauf ein einzelner Arbeitsplatz 30 nicht ausreichend, sondern eine Reihe von Arbeitsplätzen 30a, 30b, 30c ... erforderlich, kann die Strom- und Datenversorgungseinrichtung 50 zudem einen Anschluss 62 aufweisen, der eine Verbindung zu einem weiteren Arbeitsplatz 30b, 30c, 30d, ... ermöglicht. Ein derartiges Arbeitsplatzsystem 70 ist schematisch in Fig. 4C dargestellt. Dabei zeigt Fig. 4C auch, dass die Strom- und Datenversorgungseinrichtungen 50a, 50b, 50c die Arbeitsplätze 30a, 30c und 30c über die Schnittstellen 62a, 62b miteinander verbinden.

Die Installation der Funktionsmodule 1 und das Einrichten des Arbeitsplatzes kann sehr einfach erfolgen. Funktionsmodule 1, z.B. Leermodule und solche mit Funktionselementen, werden ineinander gesteckt und das als Kabelmodul ausgebildete Funktionsmodul 1 mit der Strom- und Datenversorgungseinrichtung 50 verbunden. Den logischen Abschluss einer Kette von Funktionsmodulen 1 bildet die Strom- und Datenversorgungseinrichtung 50. Die Verkabelung der Funktionsmodule 1 in den verschiedenen Fachböden 36a, 36b findet in der Strom- und Datenversorgungseinrichtung 50 statt. Pro Arbeitsplatz 30a, 30b, 30c, 30d wird eine Strom- und Datenversorgungseinrichtung 50 eingesetzt. Mehrere Strom- und Datenversorgungseinrichtungen 50a, 50b, 50c können mit einem Netzwerkkabel verbunden werden. Sind alle Teile zusammengesteckt und montiert, kann der Netzstecker 54 in die Stromsteckdose gesteckt werden.

Zum Betreiben und Verwalten der Funktionsmodule 1 können Standardbefehle in Form von Steuer-ldentifizierungscodes vorgesehen sein. So kann z.B. eine Karte mit Barcodes - im Falle von ldentifizierungscodes in Form von Barcodes - vorgesehen sein, auf der Systemsteuerbefehle abgelegt sind, etwa ein Barcode für "Bestätigen", ein Barcode für "Abbruch", ein Barcode für "Verwalten", ein Barcode für "Löschen", ein Barcode für "alle Löschen". Die Barcodes können z.B. auf einer Instruktionscodekarte abgebildet sein. Ferner können Barcodes für Farben und Barcodes für deren Helligkeit, z.B. für minimale Helligkeit und für maximale Helligkeit, vorgesehen sein. Die Barcodes können z.B. auf einer Farbcodekarte abgebildet sein.

Das Einrichten der installierten Funktionsmodule 1 nach dem Stecken und Verkabeln kann erfolgen, indem als erster ldentifizierungscode "Verwalten" an der Strom- und Datenversorgungseinrichtung 50 eingelesen bzw. eingescannt werden. Die angeschlossenen Funktionsmodule 1 signalisieren mit einem Signal, z.B. einem Blinken, ihre Funktionsbereitschaft. Es folgt ein Einlesen bzw. Einscannen eines Baugruppenbarcodes, der z.B. für eine gewünschte Baugruppe erstellt ist. Mit dem externen Bedienelement, z.B. einem Programmierstift, werden einzelne Funktionsmodule 1 über ihre Eingabeelemente aktiviert. Sind alle für die Baugruppe notwendigen Behälter 38 mit einer leuchtenden LED des zugeordneten Funktionsmoduls 1 gekennzeichnet, kann die Farbe der LED mittels der Farbcodekarte gewählt werden. Zweckmäßigerweise wird für alle LEDs die gleiche Farbe gewählt. Dann kann der Barcode für "Bestätigen" eingelesen werden oder nochmals der Baugruppenbarcode, was als Bestätigung gewertet wird. Die Einstellungen sind nun gespeichert und der Programmiermodus wird verlassen. Für weitere Baugruppen kann der Vorgang wiederholt werden. Je nach Speicher in den Funktionsmodulen 1 können z.B. bis zu Hundert verschiedene Baugruppen gespeichert werden.

Zum Löschen einer Baugruppe kann der Barcode "Löschen" an der Strom- und Datenversorgungseinrichtung 50 eingescannt werden und anschließend der zu löschende Baugruppenbarcode. Der Löschbefehl wird durch Einscannen des Barcodes für "Bestätigen" bestätigt.

Zum Löschen aller gespeicherten Baugruppen oder Produktionsabläufe kann der Barcode "alle Löschen" an der Strom- und Datenversorgungseinrichtung 50 eingescannt werden. Der allgemeine Löschbefehl wird durch Einscannen des Barcodes für "Bestätigen" bestätigt.

Fig. 5 zeigt ein Flussdiagramm für die Programmierung von Funktionsmodulen mittels eines ldentifizierungscodes. Ist ein solcher ldentifizierungscode für beispielsweise die Fertigung eines Werkstücks hinterlegt, braucht der ldentifizierungscode nur noch über die Strom- und Datenversorgungseinrichtung 50 an die Prozessoren 11 (Fig. 1) der Funktionsmodule 1 weitergegeben werden, um diejenigen Funktionsmodule 1 zu aktivieren, die die Aufnahmevorrichtungen 38 kennzeichnen, die wiederum die benötigten Elemente für die Fertigung der Baugruppe bzw. des Werkstücks oder für einen Arbeitsablauf, z.B. zur Kommissionierung, beinhalten.

Im Folgenden wird die Programmierung mittels einer barcodescannerunterstützten Programmierung erläutert. Selbstredend ist jedoch jede andere Programmiertechnik oder jedes andere Eingabeverfahren möglich.

In einem ersten Schritt S10 wird die Daten- und/oder Stromversorgungseinrichtung derart angesteuert, dass sie den Programmiermodus startet. Dies kann beispielsweise über die Eingabe bzw. das Einlesen eines speziellen Barcodes erfolgen. Wird der Programmiermodus gestartet, kann vorgesehen sein, dass alle an dem Arbeitsplatz 30 vorhandenen Funktionsmodule 1 kurz aktiviert werden, z.B. aufleuchten oder ein akustisches Signal ausgegeben wird, damit der Programmierer über das erfolgreiche Starten des Programmiermodus informiert wird.

In einem sich daran anschließenden zweiten Schritt S12 wird ein ldentifizierungscode, beispielsweise ein Barcode entsprechend einer Artikelnummer vorgegeben, unter dem der zu definierende Fertigungsprozess eines Werkstücks oder eine Baugruppe gespeichert werden soll. Dies kann ebenfalls durch Einlesen oder Einscannen des ldentifizierungscodes bzw. Barcodes erfolgen. Ist dieser Programmierschritt abgeschlossen, kann das System wiederum eine visuelle oder akustische Information, beispielsweise ein Piepsen, ausgeben.

Ist vorgesehen, dass die Funktionsmodule mehrere Funktionselemente aufweisen, können die entsprechenden Funktionselemente in Schritt S14 ebenfalls mittels Scannens ausgewählt werden. Beispielsweise ist möglich, einen Barcode für das Funktionselement LED und einem Barcode für das Funktionselement Bewegungssensor bereitzustellen. Dabei kann zudem auch, falls vorhanden, die Farbe der LED ausgewählt werden. Ist die Auswahl erfolgt, gibt das System vorteilhafterweise wiederum ein Bestätigungssignal visueller oder akustischer Natur aus.

Dann kann die eigentliche Programmierung der Aktivierung/Deaktivierung der Funktionsmodule, die die für die Herstellung des entsprechenden Werkstücks benötigten Elemente kennzeichnen, in Schritt S16 durchgeführt werden. Dazu wird beispielsweise mittels eines externen Bedienelements, etwa eines Programmierstifts, die Eingabevorrichtung des jeweiligen Funktionsmoduls betätigt, so dass das entsprechende Funktionsmodul manuell aktiviert/deaktiviert wird (Schritt S18). Neben der reinen Anzahl der Funktionsmodule kann auch vorgesehen sein, dass zudem die Reihenfolge der Aktivierungen/Deaktivierungen im jeweiligen Funktionsmodul mit abgespeichert wird. Dies ist beispielsweise dann vorteilhaft, wenn im Laufe des Produktionsvorgangs ein Element mehrmals verwendet werden muss, wobei z.B. mindestens ein Zwischenschritt zwischen den jeweiligen Verwendungen liegt. Zudem ermöglicht die sequenzielle Ansteuerung und Programmierung, dass Fehler im Zusammenbau vermieden werden können.

Selbstverständlich können auch einige Schritte zusammengefasst werden, etwa Schritt S14 und S16.

Sind alle Funktionsmodule, die für die Fertigung eines Werkstücks benötigt werden definiert, wird die Eingabe in Schritt S20 im jeweiligen Funktionsmodul abgespeichert (ebenfalls durch Eingabe eines Barcodes) und der Programmiermodus verlassen. Dieses kann ebenfalls über Scannen eines Barcodes erfolgen und mittels eines visuellen und/oder akustischen Signals bestätigt werden.

Da die einzelnen Systeme bzw. Funktionsmodule eines signalgesteuerten Arbeitsplatzes 30 nicht mehr zentral von einer EDV angesteuert werden müssen, sondern direkt am Arbeitsplatz Produktionsabläufe bzw. Baugruppen programmiert werden können, d.h. dezentral an den Funktionsmodulen, ist eine hohe Flexibilität auf die unterschiedlichen Anforderungen möglich. Aufgrund der einfachen und ebenfalls intuitiven Programmierung ist eine Anpassung des Arbeitsplatzes auch von weniger qualifizierten Personen leicht durchzuführen, so dass eine hohe Anpassungsfähigkeit des Systems an die individuellen Wünsche besteht.

### Bezugszeichenliste:

- 1: Funktionsmodul
- 2: Unterteil
- 4: Oberteil
- 6: Elektronikplatine
- 8: erste Kontaktverbindung
- 10: zweite Kontaktverbindung
- 11: Prozessor
- 12: Rastnase
- 14: Rastaufnahme
- 16: Öffnungen
- 18: Vorsprünge
- 20: Aufnahmen
- 22: Klemmlasche
- 24: Strom- und/oder Datenleitung
- 26: Kontaktverbindung zu einer zentralen Strom- und/oder Datenversorgungseinrichtung
- 30: One-Piece-Flow Arbeitsplatz
- 32: Arbeitsplatte
- 34: Regalabschnitt
- 36: Fachboden
- 38: Aufnahmevorrichtung
- 40: Werkzeugabschnitt
- 42: Beleuchtungs- Anzeigeabschnitt
- 44: Beleuchtung
- 46: Anzeigevorrichtung
- 50: Strom- und/oder Datenversorgungseinrichtung
- 52: Netzteil
- 54: Stecker
- 56: Steuereinheit
- 58: Anschluss zu Fachboden
- 60: Anschluss zu Datengerät
- 62: Anschluss zu weiterem Arbeitsplatz

## Patentansprüche

1. Funktionsmodul (1) für einen signalgesteuerten Arbeitsplatz (30), insbesondere für einen Montagearbeitsplatzes und/oder einen Kommissionierarbeitsplatz, **dadurch gekennzeichnet, dass** das Funktionsmodul (1) eine eingangsseitig erste Kontaktverbindung (8) und eine ausgangsseitig zweite Kontaktverbindung (10) aufweist, wobei die erste und die zweite Kontaktverbindung (8, 10) komplementär zueinander ausgebildet sind, und die erste Kontaktverbindung (8) dazu ausgelegt ist, eine Strom- und Datenversorgung für das Funktionsmodul (1) bereitzustellen, wobei ein Prozessor (11) zum Verarbeiten von Daten vorgesehen ist, die von der Kontaktverbindung (8) bereitgestellt werden, und wobei der Prozessor (11) ausgelegt ist, auf Basis einer über die Datenversorgung empfangenen Aktivierungs-/Deaktivierungsaufforderung eine Funktion des Funktionsmoduls (1) zu aktivieren bzw. deaktivieren.

2. Funktionsmodul nach Anspruch 1, wobei die zweite Kontaktverbindung (10) dazu ausgelegt ist, eine Strom- und Datenweiterleitung bereitzustellen und das Funktionsmodul (1) eine Strom- und Datenleitung (24) zwischen erster und zweiter Kontaktverbindung (8, 10) aufweist.

3. Funktionsmodul (1) für einen signalgesteuerten Arbeitsplatz (30), insbesondere für einen Montagearbeitsplatzes und/oder einen Kommissionierarbeitsplatz, **dadurch gekennzeichnet, dass** das Funktionsmodul (1) eine einzige Kontaktverbindung aufweist, die an ein Kontaktierungssystem, insbesondere Schienensystem ankoppelbar ist, welches eine Strom- und/oder Datenversorgung für das Funktionsmodul (1) bereitstellt, wobei ein Prozessor (11) zum Verarbeiten von Daten vorgesehen ist, die von der Kontaktverbindung (8) bereitgestellt werden, und wobei der Prozessor (11) ausgelegt ist, auf Basis einer über die Datenversorgung empfangenen Aktivierungs-/Deaktivierungsaufforderung eine Funktion des Funktionsmoduls (1) zu aktivieren bzw. deaktivieren.

4. Funktionsmodul nach einem der vorhergehenden Ansprüche, mit mindestens einem Funktionselement, das die Funktion des Funktionsmoduls bereitstellt.

5. Funktionsmodul nach Anspruch 4, wobei das Funktionsmodul (1) als Leucht- oder Anzeigemodul mit einem Leuchtelement als Funktionselement, insbesondere mit mindestens einer LED, und/oder als Akustikmodul mit einem Akustikelement als Funktionselement, und/oder als Sensormodul mit einem Sensor, insbesondere einem Bewegungssensor, als Funktionselement ausgebildet ist.

6. Funktionsmodul nach einem der vorhergehenden Ansprüche, mit einer Eingabevorrichtung, die mit dem Prozessor (11) derart zusammenwirkt, dass das Funktionselement (1) über ein externes Bedienelement ansteuerbar ist.

7. Funktionsmodul nach einem der vorhergehenden Ansprüche, mit einem Befestigungselement, insbesondere einer Klemmlasche (22) zum Befestigen des Funktionsmoduls (1).

8. Signalgesteuerter Arbeitsplatz (30), insbesondere Montagearbeitsplatz zum Fertigen eines Werkstücks aus mindestens einem Element oder Kommissionierarbeitsplatz, wobei der Arbeitsplatz (30) mindestens ein Funktionsmodul (1), insbesondere nach einem der vorhergehenden Ansprüche, aufweist, **dadurch gekennzeichnet, dass** an dem Arbeitsplatz (30) eine Strom- und/oder Datenversorgungseinrichtung (50) vorgesehen ist, mit der eine Strom- und/oder Datenversorgung des mindestens einen Funktionsmoduls (1) erfolgt, wobei das mindestens eine Funktionsmodul (1) eine eingangsseitig erste Kontaktverbindung (8) und eine ausgangsseitig zweite Kontaktverbindung (10) aufweist, wobei die erste und die zweite Kontaktverbindung (8, 10) komplementär zueinander ausgebildet sind, und die erste Kontaktverbindung (8) dazu ausgelegt ist, eine Strom- und/oder Datenversorgung für das Funktionsmodul (1) bereitzustellen, wobei das mindestens eine Funktionsmodul (1) einen Prozessor (11) zum Verarbeiten von Daten aufweist, die von der Kontaktverbindung (8) bereitgestellt werden, und wobei der Prozessor (11) ausgelegt ist, auf Basis einer über die Datenversorgung empfangenen Aktivierungs-/Deaktivierungsaufforderung eine Funktion des Funktionsmoduls (1) zu aktivieren bzw. deaktivieren.

9. Signalgesteuerter Arbeitsplatz (30), insbesondere Montagearbeitsplatz zum Fertigen eines Werkstücks aus mindestens einem Element oder Kommissionierarbeitsplatz, wobei der Arbeitsplatz (30) mindestens ein Funktionsmodul (1), insbesondere nach einem der Ansprüche 3 bis 7, aufweist, **dadurch gekennzeichnet, dass** an dem Arbeitsplatz (30) eine Strom- und Datenversorgungseinrichtung (50) vorgesehen ist, mit der eine Strom- und Datenversorgung des mindestens einen Funktionsmoduls (1) erfolgt, wobei das mindestens eine Funktionsmodul (1) eine Kontaktverbindung (8, 10) aufweist, die dazu ausgelegt ist, eine Strom- und Datenversorgung für das Funktionsmodul (1) bereitzustellen, wobei das mindestens eine Funktionsmodul (1) einen Prozessor (11) zum Verarbeiten von Daten aufweist, die von der Kontaktverbindung (8) bereitgestellt werden, und wobei der Prozessor (11) ausgelegt ist, auf Basis einer über die Datenversorgung empfangenen Aktivierungs-/Deaktivierungsaufforderung eine Funktion des Funktionsmoduls (1) zu aktivieren bzw. deaktivieren.

10. Arbeitsplatz nach einem der Ansprüche 8 bis 9, mit weiterhin mindestens einer Schnittstelle zum Anschließen eines Datengeräts, insbesondere eines Barcodescanner.

11. Arbeitsplatz nach einem der Ansprüche 8 bis 10, wobei das Funktionsmodul (1) an einer Aufnahmevorrichtung (38) für Elemente, insbesondere für Elemente eines Werkstücks oder einer Baugruppe, angebracht ist, wobei die Aufnahmevorrichtung (38) insbesondere als Greifschale ausgebildet ist.

12. Arbeitsplatz nach einem der Ansprüche 8 bis 11, wobei die Strom- und/oder Datenversorgungseinrichtung (50) mindestens zwei parallel geschaltete Strom- und/oder Datenverbindungsausgänge (58) aufweist, wobei vorzugsweise jeder der mindestens zwei parallel geschalteten Strom- und/oder Datenverbindungsausgänge (58) dazu ausgelegt ist, mindestens zwei in Reihe geschaltete Funktionsmodule (1) mit Strom und/oder Daten zu versorgen.

13. Arbeitsplatzsystem mit mindestens zwei signalgesteuerten Arbeitsplätzen nach einem der Ansprüche 8 bis 14, mit je einer Strom- und/oder Datenversorgungseinrichtung (50), mit der eine Strom- und/oder Datenversorgung mindestens eines Funktionsmoduls (1) nach einem der Ansprüche 1 bis 7, erfolgt, wobei die Strom- und/oder Datenversorgungseinrichtungen (50) der mindestens zwei Arbeitsplätze (30) miteinander verbunden sind.

14. Arbeits- oder Produktionsverfahren nach dem Prinzip des signalgesteuerten Arbeitsplatzes, insbesondere Verfahren zum Fertigen eines Werkstücks aus mindestens einem Element oder zum Kommissionieren von mindestens einem Element, wobei das mindestens eine benötigte Element in mindestens einer Aufnahmevorrichtung (38) aufgenommen ist, die mit einem Funktionsmodul (1) nach einem der Ansprüche 1 bis 7 gekoppelt ist, folgende Schritte umfassend:
- Feststellen des mindestens einen benötigten Elements mittels Einlesens eines vordefinierten, Daten über die benötigten Elemente enthaltenden ldentifizierungscodes, insbesondere mittels Einscannens eines Barcodes;
- Übermitteln einer Aktivierungs- und/oder Deaktivierungsaufforderung an die Funktionsmodule (1) über die Datenversorgungseinrichtung (50) durch Einlesen eines ldentifizierungscodes;
- Aktivieren einer Funktion eines oder mehrerer der Funktionsmodule (1), falls das benötigte Element in der mit dem einen oder mehreren Funktionsmodulen (1) gekoppelten Aufnahmevorrichtung (38) aufgenommen ist.

15. Verfahren nach Anspruch 14, mit folgenden weiteren Schritten:
- Feststellen einer Entnahme eines Elements aus der Aufnahmevorrichtung (38); und
- Übermitteln der Entnahme an die Datenversorgungseinrichtung (50) und/oder den Prozessor (11) des Funktionsmoduls (1).

16. Verfahren nach Anspruch 14 oder 15, wobei der Schritt des Vordefinierens des ldentifizierungscodes und der Funktionsmodule (1) folgende Schritte umfasst:
- Einlesen eines ldentifizierungscodes, insbesondere eines Barcodes, für einen Arbeits- oder Produktionsablauf oder eine Baugruppe;
- Auswählen der für den Ablauf oder die Baugruppe benötigten Elemente durch Aktivieren/Deaktivieren der Funktionsmodule (1), insbesondere durch Betätigen einer Eingabevorrichtung an einem oder mehreren ausgewählten Funktionsmodulen (1); und
- Speichern des ldentifizierungscodes in den einen oder mehreren ausgewählten Funktionsmodulen (1).
